# DEMANDE DE BREVET EUROPEEN

(11) **EP 2 337 388 A2**
(43) Date de publication de la demande: **22.06.2011**
(21) Numéro de dépôt: 10196155.5
(22) Date de dépôt: 21.12.2010
(51) Int. Cl.: H04W 12/08

(54) **Procédé d'accès sécurisé d'au moins un terminal visiteur à un réseau hote**

(30) Priorité: 21.12.2009 FR 0959334
(71) Demandeur: FRANCE TELECOM, 75015 Paris (FR)
(72) Inventeur: Dure, Sébastien, 35000 Rennes (FR); Malledant, Matthieu, 35000 Rennes (FR)
(74) Mandataire: Bloch & Bonnétat

(57) **Abrégé**

Un procédé d'accès sécurisé d'au moins un terminal visiteur (40) à un réseau hôte via une passerelle hôte (1), le terminal visiteur (40) étant déjà paramétré pour accéder à un réseau visiteur via une passerelle visiteur (4) grâce à un identifiant du réseau visiteur (S4) et une clé d'accès au réseau visiteur (K4), procédé caractérisé par le fait qu'il comprend une étape de création, par la passerelle hôte (1), d'un accès visiteur au réseau hôte; l'accès visiteur étant paramétré par l'identifiant (S4) et la clé d'accès (K4) du réseau visiteur, avec transformation virtuelle de la passerelle hôte (1) en la passerelle visiteur (4) et transmission, par le terminal visiteur (40), de l'identiftant (S4) et de la clé d'accès (K4) du réseau visiteur pour accéder au réseau hôte via l'accès visiteur de la passerelle hôte (1).

## Description

La présente invention concerne le domaine du contrôle d'accès à un réseau de transmission de données, typiquement un réseau intranet domestique, et concerne, plus particulièrement, un procédé d'accès sécurisé de terminaux visiteurs à un tel réseau. On appelle terminal visiteur un terminal se connectant de temps à autres à un réseau.

La présente invention peut être mise en oeuvre pour contrôler l'accès à un réseau domestique IP via une passerelle domestique réalisant l'interface entre les équipements de l'utilisateur et le réseau domestique, une telle passerelle étant par exemple connue sous la désignation commerciale protégée « livebox». Une passerelle domestique comprend généralement un point d'accès sans fil, utilisant notamment la technologie de transmission sans fil basée sur la norme de réseau radioélectrique IEEE 802.11 et ses évolutions, regroupées sous l'appellation Wifi (pour « Wireless Fidelity »). Pour connecter les équipements de l'utilisateur au réseau domestique, il est connu des protocoles du type WEP (pour « Wired équivalent Privacy ») et WPA (pour « WiFi Protected Access ») a-fin de sécuriser l'identification des équipements au réseau.

Par la suite, on entend par équipements tout dispositif apte à se relier au réseau, tel un ordinateur portable ou un dispositif du type PDA (pour« Personnal Digital Assistant »),

Pour accéder au réseau domestique avec un équipement disposant d'une liaison radio, tel un ordinateur portable, un utilisateur saisit dans son équipement les paramètre d'identification du réseau. En particulier, il saisit ou sélectionne le nom du réseau domestique, connu de l'homme du métier sous l'abréviation SSID (pour « Service Set Identifier »), ainsi qu'une clé d'accès au réseau domestique, telle qu'une clé d'accès WEP ou WPA.

Ces étapes de saisie sont fastidieuses mais ne sont réalisées généralement qu'une seul fois, les paramètres d'identification de l'équipement au réseau domestique étant sauvegardées dans l'équipement après la première saisie. Ainsi, pour toute connexion ultérieure de l'équipement au réseau domestique, les paramètres d'identification seront automatiquement transmis de l'équipement à la passerelle domestique sans intervention de l'utilisateur. Un tel procédé d'identification est bien adapté pour des utilisateurs accédant de manière récurrente à un même réseau domestique.

Au contraire, ce procédé d'identification est contraignant pour des utilisateurs visiteurs, accédant de manière occasionnelle au réseau domestique.

A titre d'exemple, lorsqu'une personne accueille un visiteur à son domicile, ce dernier peut souhaiter accéder au réseau domestique du domicile, dit réseau hôte, avec son propre ordinateur portable pour consulter ses emails, partager des contenus multimédia, etc.

Pour accéder au réseau hôte, et à nouveau, le visiteur doit saisir dans son ordinateur les paramètres d'identification du réseau hôte (nom du réseau domestique et clé d'accès), ces étapes fastidieuses étant nécessaires quand bien même le visiteur souhaite accéder au réseau hôte pour une courte période de temps. Dans certains cas, la période de saisie des paramètres d'identification peut être même plus longue que la période d'accès au réseau hôte par le visiteur.

En outre, l'ordinateur du visiteur peut être déjà configuré pour accéder à un autre réseau domestique, celui de son propre domicile par exemple, dit réseau visiteur, ce qui peut poser un problème.

Pour accéder au réseau hôte, le visiteur doit modifier le paramétrage de son ordinateur portable qui est configuré pour accéder au réseau visiteur. De retours à son domicile, le visiteur doit, de nouveau, modifier le paramétrage de son ordinateur pour se connecter de nouveau au réseau visiteur. Sans revenir sur le caractère long et fastidieux de telles étapes, la saisie répétée de clés d'accès, comprenant vingt-six caractères hexadécimaux, est sujette aux erreurs de saisie et présente donc des inconvénients.

Du point de vue de la sécurité, il est toujours risqué pour l'hôte de fournit au visiteur les paramètres d'identification de son réseau. En effet, si l'hôte ne souhaite plus permettre au visiteur d'accéder à son réseau, l'hôte doit modifier les paramètres d'identification de son réseau via sa passerelle domestique et doit, par voie de conséquence, paramétrer de nouveau tous ses équipements (PDA, ordinateur portable, console de jeux, etc.) avec les nouveau paramètres d'identification modifiés.

Afin d'éliminer au moins certains de ces inconvénients, l'invention concerné un procédé d'accès sécurisé d'au moins un terminal visiteur à un réseau hôte via une passerelle hôte, le terminal visiteur étant déjà paramétré pour accéder à un réseau visiteur via une passerelle visiteur grâce à un identifiant du réseau visiteur et une clé d'accès au réseau visiteur, procédé caractérisé par le fait qu'il comprend les étapes suivantes:
- fourniture, par le terminal visiteur, de l'identifiant du réseau visiteur à la passerelle hôte;
- transmission, par la passerelle hôte, de l'identifiant du réseau visiteur à la passerelle visiteur;
- transmission, par la passerelle visiteur, de la clé d'accès au réseau visiteur, à la passerelle hôte;
- création, par la passerelle hôte, d'un accès visiteur au réseau hôte; l'accès visiteur étant paramétré par l'identifiant et la clé d'accès du réseau visiteur, avec transformation virtuelle de la passerelle hôte en la passerelle visiteur; et
- transmission, par le terminal visiteur, de l'identifiant et de la clé d'accès dit réseau visiteur pour accéder au réseau hôte via l'accès visiteur de la passerelle hôte.

Ainsi, le visiteur n'a plus à saisir les paramètres d'identification du réseau hôte et conserve ses paramétres d'identification au réseau visiteur. L'accès au réseau se fait de manière transparente sans action de sa part. Par ailleurs, l'hôte ne transmet pas au visiteur les paramètres d'identification du réseau hôte ce qui ne compromet pas la sécurité du réseau hôte.

Selon une variante, la passerelle hôte comprend une mémoire de stockage d'adresses de passerelles partenaires, comprenant au moins l'adresse de la passerelle visiteur, et un module de coordination agencé pour consulter la mémoire. La passerelle hôte transmet aux adresses des passerelles partenaires, l'identifiant du réseau visiteur via le module de coordination,

Grâce à cette variante, l'accès n'est autorisé qu'aux germinaux qui sont connus de là passerelle hôte ce qui évite qu'un terminal inconnu se connecte au réseau hôte.

Le procédé comprend en outre une étape dans laquelle la passerelle hôte transmet à la passerelle visiteur l'identifiant du réseau visiteur et un identifiant unique du terminal visiteur.

La transmission d'un identifiant unique du terminal visiteur, comme par exemple son adresse MAC, permet de s'assurer que le terminal visiteur est bien déjà identifié auprès du réseau visiteur. La sécurité est alors renforces.

Selon une variante, les échanges entre la passerelle hôte et la passerelle visiteur sont réalisés via un protocole de communication sécurisé, de préférence, du type HTTPS.

Selon un aspect de l'invention, l'accès visiteur est supprimé lorsque le terminal visiteur n'accède plus au réseau hôte. Ainsi, si le terminal visiteur souhaite se connecter de nouveau au réseau hôte, la procédure d'accès sécurisé doit être de nouveau mise en oeuvre ce qui garantit un haut niveau de sécurité. De plus, la clé d'accès du réseau visiteur est effacée de la mémoire de la passerelle hôte afin de conserver le caractère privé de cette clé vis-à-vis de l'hôte.

Selon un autre aspect de l'invention, les transmissions de données entre le terminal visiteur et la passerelle hôte sont réalisées via un protocole de communication sans fil, de préférence, par WIFI ®.

Selon une variante, la passerelle hôte possède une adresse de la passerelle visiteur pour lui transmettre des données, l'adresse de la passerelle visiteur étant obtenue par les étapes suivantes :
- transmission, par un terminal hôte, d'un identifiant unique du visiteur, à la passerelle hôte;
- transmission, par la passerelle hôte, de l'identifiant unique du visiteur, à une base de données d'utilisateurs comprenant au moins l'adresse de la passerelle visiteur associée à l'identifiant unique du visiteur;
- transmission, à partir de la base de données d'utilisateurs, de l'adresse de la passerelle visiteur à la passerelle hôte; et
- stockage de t'adresse de la passerelle visiteur dans la passerelle hôte.

De manière avantageuse, l'adresse de la passerelle visiteur est obtenue simplement par la passerelle hôte à l'aide uniquement d'un identifiant unique connu de l'hôte et qu'il fournit à la passerelle hôte, comme, par exemple, un numéro de téléphone ou une adresse e-mail.

Ces étapes d'obtention de l'adresse d'une passerelle peuvent être mises en oeuvre dans divers procédés d'identification et ne se limitent pas à un procédé d'accès sécurisé d'au moins un terminal visiteur à un réseau hôte via une passerelle hôte.

A cet effet, l'invention concerne également un procédé de formation d'un réseau convivial d'identification d'un réseau hôte via une passerelle hôte, caractérisé par le fait qu'il comprend les étapes suivantes :
- transmission, par un terminal hôte, d'un identifiant unique d'un utilisateur partenaire, à la passerelle hôte ;
- transmission, par la passerelle hôte, de l'identifiant unique de l'utilisateur partenaire, à une base de données d'utilisateurs comprenant au moins l'adresse des passerelles partenaires des utilisateurs associée à leur identifiant unique;
- transmission, à partir de la base de données d'utilisateurs, de l'adresse de la passerelle partenaire de l'utilisateur partenaire à la passerelle hôte ; et
- stockage de l'adresse de la passerelle partenaire dans la passerelle hôte,

Le procédé de formation d'un réseau convivial d'identification d'un réseau hôte permet de collecter les adresses des passerelles partenaires de manière simple et sécurisée.

Le procédé de formation d'un réseau convivial d'identification est unitaire avec le procédé d'accès sécurisé en tant que produit intermédiaire, le procédé de formation pouvant être un préliminaire au procédé d'accès sécurisé. Les procédés permettent de résoudre un même problème technique relatif à l'accès de personnes autorisées à un réseau hôte.

Selon une variante, l'identifiant unique d'un utilisateur partenaire est un numéro de téléphone ou une adresse e-mail. Cet identifiant usuel est connu de l'hôte, cet identifiant étant généralement présent dans un carnet d'adresses de l'hôte.

L'invention concerne en outre une passerelle hôte pour la mise en oeuvre du procédé d'accès tel que présenté précédemment comprenant :
- un point d'accès agence pour recevoir un identifiant d'un réseau visiteur par un terminal visiteur;
- une mémoire de stockage d'adresses de passerelles partenaires comprenant au moins une adresse d'une passerelle visiteur d'un réseau visiteur, le terminal visiteur étant déjà identifié auprès de ladite passerelle visiteur ;
- un module de coordination agencé pour transmettre l'identifiant du réseau visiteur à l'adresse de la passerelle visiteur et recevoir en retour, si l'identifiant du réseau visiteur transmis est connu de la passerelle visiteur, une clé d'accès du réseau visiteur ;
- le point d'accès étant agencé pour établir d'une part, un accès hôte au réseau hôte, paramètre par un identifiant et une clé d'accès au réseau hôte, et, d'autre part, un accès visiteur au réseau hôte, paramétré par l'identifiant et la clé d'accès du réseau visiteur.

Selon un aspect de l'invention, le point accès est agencé pour fonctionner selon un mode « multi-ssid » afin d'établir simultanément l'accès hôte et l'accès visiteur.

L'invention concerne également un programme d'ordinateur pour l'exécution d'un procédé d'accès sécurisé tel que présenté précédemment ainsi qu'un programme d'ordinateur pour l'exécution d'un procédé de formation d'un réseau convivial d'identification.

L'invention concerne en outre un support d'enregistrement dans lequel est stocké au moins un desdits programmes.

D'autres caractéristiques et avantages de l'invention apparaîtront lors de la description qui suit faite en regard de figures annexées données à titre d'exemples non limitatifs.
- la figure 1 représente schématiquement un équipement du type PDA et un ordinateur portable accédant respectivement à un réseau hôte, via une passerelle hôte, et à un réseau visiteur, via une passerelle visiteur;
- la figure 2 représente schématiquement une étape du procédé de formation d'un réseau convivial d'identification selon l'invention ;
- la figure 3 représente un réseau convivial d'identification selon l'invention
- la figure 4 représente tin diagramme schématique des étapes du procédé d'accès sécurisé selon l'invention;
- la figure 5 représente schématiquement une communication entre la passerelle hôte et la passerelle visiteur de la figure 1 selon une étape du procédé d'accès sécurisé de l'invention; et
- la figure 6 représente schématiquement l'accès des équipements de la figure 1 au réseau hôte selon le procédé d'accès sécurisé de l'invention.

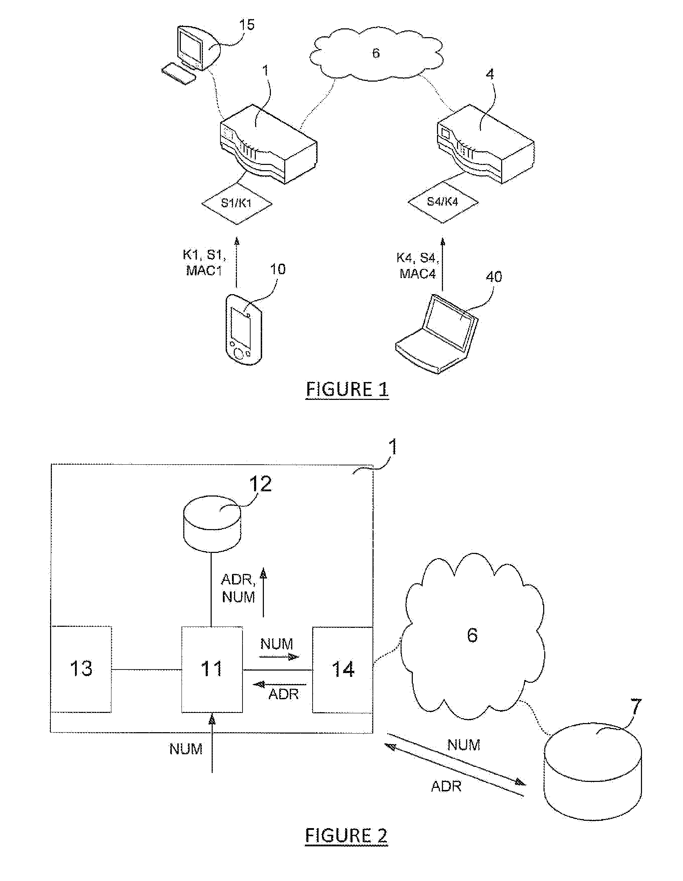

En référence à la figure 1 une passerelle domestique d'un réseau hôte, désignés par la suite passerelle hôte 1, est reliée au réseau internet 6 par une liaison haut débit du type ADSL.

En référence à la figure 2, la passerelle hôte 1, telle que celle connue sous la dénomination commerciale « livebox », comprend ici un modem ADSL 14, un commutateur réseau (non représenté) permettant de connecter des équipements de manière filaire au réseau hôte, un point d'accès 13 permettant de connecter des équipements au réseau hôte de manière radio, par exemple, via le protocole WIFI, une mémoire 12 stockant, entre autres, les paramètres d'identification de terminaux hôte au point d'accès 13 et un module de coordination 11, relié au modem 14, au point d'accès 13 et à la mémoire 12, coordonnant l'identification de terminaux au réseau hôte via le point d'accès 13,

Les équipements connectés de manière filaire ou sans fil à la passerelle hôte 1 forment le réseau hôte. Lorsque plusieurs équipements appartiennent à un même réseau, ces derniers peuvent échanger des données entre eux de manière rapide et sécurisée. Ainsi, en référence à la figure 1, le réseau hôte comprend un ordinateur 15 relié de manière filaire au commutateur de la passerelle hôte 1 et un PDA relié de manière radio au point d'accès 13, le réseau, hôte étant relié à internet via le modem ADSL 14.

Toujours en référence à la ligure 1, pour connecter un terminal hôte 10, ici un PDA, au réseau hôte, un utilisateur hôte saisit dans le terminal hôte 10 les paramètres d'identification au point d'accès 13 qui ont été fournis par l'opérateur de la passerelle hôte 1. En particulier, l'utilisateur hôte saisit un identifiant du réseau hôte S1, ici le nom du réseau hôte, c'est-à-dire son SSID, et une clé d'accès au réseau hôte K1, telle une clé WEP ou WPA.

Lors de la première ïdentification du terminal hôte 10 auprès de la passerelle hôte 1, le terminal hôte 10 transmet son adresse physique unique MAC1 (pour « Média Access Control »), correspondant à l'adresse de son interface réseau, à la passerelles hôte 1 qui la sauvegarde dans sa mémoire 12 pour les identifications ultérieurs. Le terminal hôte 10 sauvegarde, quant à lui, l'identifiant du réseau hôte S1 et la clé d'accès au réseau hôte K1 La mémoire 12 se présente, dans cet exemple, sous la forme d'une base de donnés dans laquelle les paramètres d'identification du terminal hôte 10 auprès du point d'accès 13 sont enregistrés.

Pour se connecter de nouveau à la passerelle hôte 1, le terminal hôte 10 transmet son adresse physique unique MAC1, l'identifiant du réseau hôte S1 et la clé d'accès au réseau hôte K1 qui sont reçus par le point d'accès 13 puis transmis au module de coordination 11 qui vérifie si le terminal hôte 10 est inscrit dans ledit réseau hôte en adressant des requêtes à la mémoire 12. L'accès du terminal hôte 10 avec les paramètres d'identification fournis par l'opérateur de la passerelle hôte 1 est désigné par la suite « accès hôte ».

De manière similaire, toujours en référence à la figure 1, pour connecter un terminal visiteur 40, ici un ordinateur portable, à un réseau visiteur via une passerelle visiteur 4, un utilisateur visiteur saisit, dans l'ordinateur portable, les paramètres d'identification fournis par l'opérateur de la passerelle visiteur 4 (identifiant du réseau visiteur S4 et clé d'accès au réseau visiteur K4).

Lors de la première identification du terminal visiteur 40 auprès de la passerelle visiteur 4, le terminal visiteur 40 transmet son adresse physique unique MAC4 à la passerelle visiteur 4 qui la sauvegarde pour les identifications ultérieures. Le terminal visiteur 40 sauvegarde, quant à lui, identifiant du réseau visiteur S4 et la clé d'accès au réseau visiteur K4.

Les réseaux hôte et visiteur sont indépendants l'un de l'autre et correspondent, par exemple, à des réseaux domestiques de deux domiciles différents, les passerelles hôte 1 et visiteur 41 pouvant dépendre du même opérateur ou d'opérateurs différents.

### Formation d'un réseau convivial d'identification

Afin de faciliter l'accès de terminaux visiteurs 40 au réseau hôte, on crée un réseau convivial d'identification de l'hôte à la manière d'un « réseau social » tel que ceux connus sous la désignation commerciale Facebook ® ou Linkedin ®.

A cet effet, en référence à la figure 2, l'hôte renseigne dans la passerelle hôte 1 via son terminal hôte 10 les personnes avec lesquelles il entretient des contacts (amis, familles, contacts professionnels, etc.), ces personnes étant désignées par la suite « partenaires ». L'hôte saisit à l'aide de l'interface de la passerelle hôte 1, par exemple une interface WEB accessible via internet ou le réseau hôte, des identifiants uniques NUM des partenaires, par exemple, un numéro de téléphone fixe ou mobile, une adresse email, etc..

Selon une variante de l'invention, l'hôte met en relation avec la passerelle hôte 1 un carnet d'adresse comprenant l'ensemble de ses partenaires. A titre d'exemple, la mise en relation est réalisée par transmission à la passerelle hôte, via un terminal hôte, d'un fichier de données de carnet d'adresse, cette transmission de fichier de donnée étant connue de l'homme du métier sous la désignation « importation de données ». Ainsi, de manière rapide et simple, la passerelle hôte 1 prend connaissance des partenaires du réseau convivial d'identification.

Les identifiant uniques NUM des partenaires (numéro de téléphone, email, etc.) sont reçus par le module de coordination Il qui se met en relation avec une base de clients 7 dans laquelle sont stockés les données des clients d'un ou plusieurs opérateurs. Cette mise en relation est réalisée, dans cet exemple, via le réseau internet 6.

De manière classique, la base de clients 7 comprend pour chaque client son non, prénom, adresse postale, adresse émail, numéro de téléphone fixe et numéro de téléphone portable ainsi qu'une adresse de la passerelle domestique du client, c'est-à-dire l'adresse IP de ladite passerelle.

Pour chaque identifiant unique NUM d'un partenaire transmis par le module de coordination Il à la base de clients 7, cette dernière retourne l'adresse de la passerelle du partenaire ADR au module de coordination Il comme représenté sur la figure 2 qui l'associe avec l'identifiant unique NUM dans la mémoire 12 de la passerelle hôte 1,

En outre, selon une variant de l'invention, la base de clients 7 informe les passerelles des partenaires, dites passerelles partenaires, que la passerelle hôte 1 est autorisé à accéder aux informations détenues par les passerelles partenaires. Cela permet de sécuriser les échanges de données entre la passerelle hôte 1 et les passerelles partenaires.

Lorsque la base de données client 7 ne comprend pas l'adresse de la passerelle partenaire ADR, la base de données client 7 en informe la passerelle hôte 1 qui l'indique dans sa mémoire 12.

Après saisie de l'ensemble des identifiants uniques NUM des partenaires de l'hôte, la passerelle hôte 1 comprend dans sa mémoire 12 une pluralité d'adresses de passerelles partenaires ADR. L'hôte dispose ainsi, dans sa passerelle hôte 1, d'un réseau convivial d'identification dans lequel les partenaires de son choix sont autorisés à accéder à son réseau hôte. La formation du réseau convivial d'identification est simple à mettre en oeuvre car elle ne nécessite que des identifiants usuels desdits partenaires. En outre, aucune action des partenaires n'est requise pour appartenir au réseau convivial d'identification du réseau hôte.

De manière alternative, les passerelles partenaires peuvent également être localisées par un service de DNS dynamique (pour « Domain Name System »).

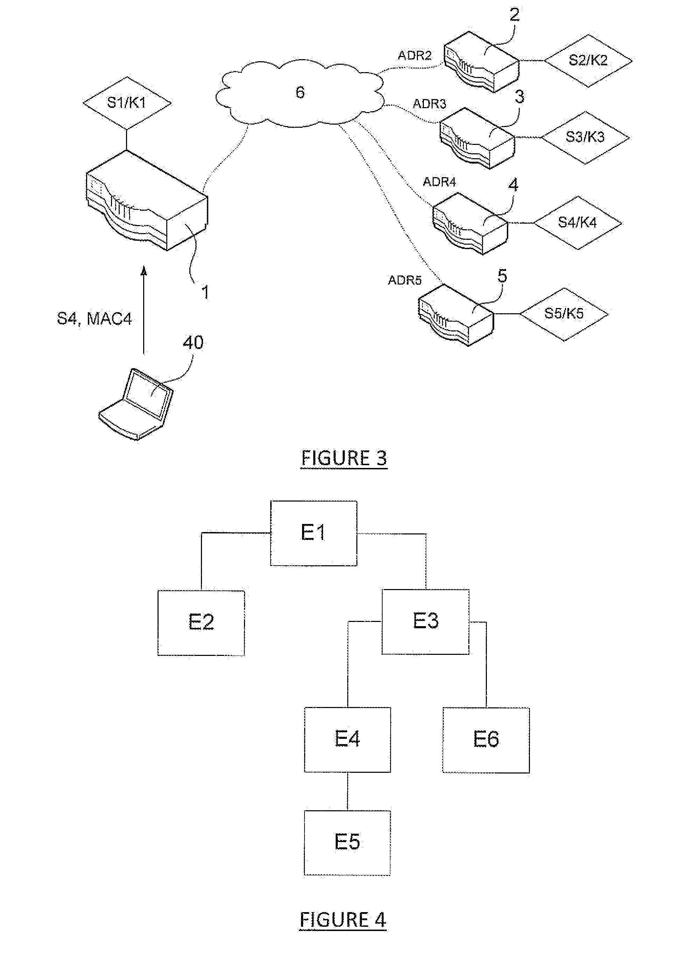

En référence à la figure 3, la mémoire 12 de la passerelle hôte 1 comprend les adresses ADR2, ADR3, ADR4, ADR5 des passerelles partenaires 2, 3, 4, 5, Chacune des passerelles partenaires permet usuellement à un terminal d'accéder à son réseau partenaire si le terminal connaît les paramètres d'identification fournis par l'opérateur de la passerelle partenaire. De manière similaire à la passerelle hôte, les paramètres d'identification comprennent un identifiant du réseau partenaire S2, S3, S4, S5 et une clé d'accès au réseau partenaire K2, K3, K4, K5.

Le procédé d'accès d'un terminal visiteur d'un réseau hôte va être détaillé à l'appui d'un exemple de mise en ouvre. Le visiteur est ici le partenaire se connectant usuellement à la passerelle partenaire référencée 4 dont l'adresse ADR4 est connue de la passerelle hôte 1.

### Identification sécurisée d'un partenaire au réseau hôte

En référence à la figure 3, le visiteur se rend avec son terminal visiteur 40 au domicile de l'hôte pour se connecter au réseau hôte. A cet effet, le terminal visiteur 40 envoie une requête en connexion, connue de l'homme du métier sous la dénomination anglaise « Probe Request » et définie par le standard IEEE 802.11, à la passerelle hôte 1. Toujours en référence à la figure 3, la requête en connexion du terminal visiteur 40 comprend l'identifiant du réseau visiteur S4 et son adresse physique unique MAC4.

En référence au diagramme de la figure 4, le module de coordination Il envoie une requête à sa mémoire 12 afin de vérifier si ces paramètres d'identification sont connus (étape E1). Autrement dit, la passerelle hôte vérifie si le terminal visiteur 40 est autorisé à se connecter au réseau hôte via l'accès hôte.

Comme la passerelle hôte 1 est paramétrée pour se connecter uniquement avec des terminaux hôtes 10 connaissant l'identifiant du réseau hôte S1, la requête en connexion du terminal visiteur 40 ne sera pas acceptée.

Le module de coordination Il transmet l'identifiant du réseau visiteur S4 avec l'adresse physique unique MAC4 aux passerelles partenaire 2, 3, 4, 5 dont les adresses ADR2, ADR3, ADR4, ADR5 sont répertoriées dans la mémoire 12 de la passerelle hôte (étape E3) comme représenté sur la figure 4. Pour obtenir les adresses des passerelles ADR2, ADR3, ADR4, ADR5. une requête SQL (pour « Structured Query Language ») est adressée par le module de coordination 11 de la passerelle hôte 1 à la mémoire 12 qui répond en transmettant lesdites adresses au module de coordination 11. Afin d'optimiser le temps de traitement de la requête, cette dernière est codée en langage de programmation C.

Selon une alternative, le terminal visiteur ne transmet pas son adresse physique unique MAC4, le module de coordination 11 envoyant une requête au point d'accès 13 de la passerelle hôte 1 pour connaître cette adresse physique unique MAC4. A cet effet, le module de coordination Il peut utiliser la commande « tail » bien connue de l'homme du métier.

Les transmissions de données entre les passerelles 1, 2, 3, 4, 5 sont réalisées par des requêtes du type HTTPS, bien connues de l'homme du métier, afin de sécuriser les échanges. Chacune des passerelles partenaires 2, 3, 4, 5 accueille favorablement les requêtes HTTPS de la passerelle hôte 1 étant donné qu'elles ont été préalablement autorisées par la base de données de clients 7 à communiquer avec la passerelle hôte 1.

Les passerelles partenaires 2, 3, 4, 5 comprennent chacune, comme la passerelle hôte 1, une mémoire dans laquelle sont stockés les paramètres d'identification de terminaux partenaires aux réseaux partenaires. Chacune des passerelles partenaires 2, 3, 4, 5 vérifie dans sa mémoire si l'identifiant du réseau visiteur S4 et l'adresse physique unique MAC4 lui sont connus.

Dans la négative, la passerelle partenaire 2, 3, 5, qui ne correspond pas à la passerelle visiteur 4, informe la passerelle hôte 1 qu'une identification est impossible (étape E6). Si aucune passerelle partenaire ne peut identifier le terminal visiteur 40, aucune identification n'est possible via le réseau convivial d'identification,

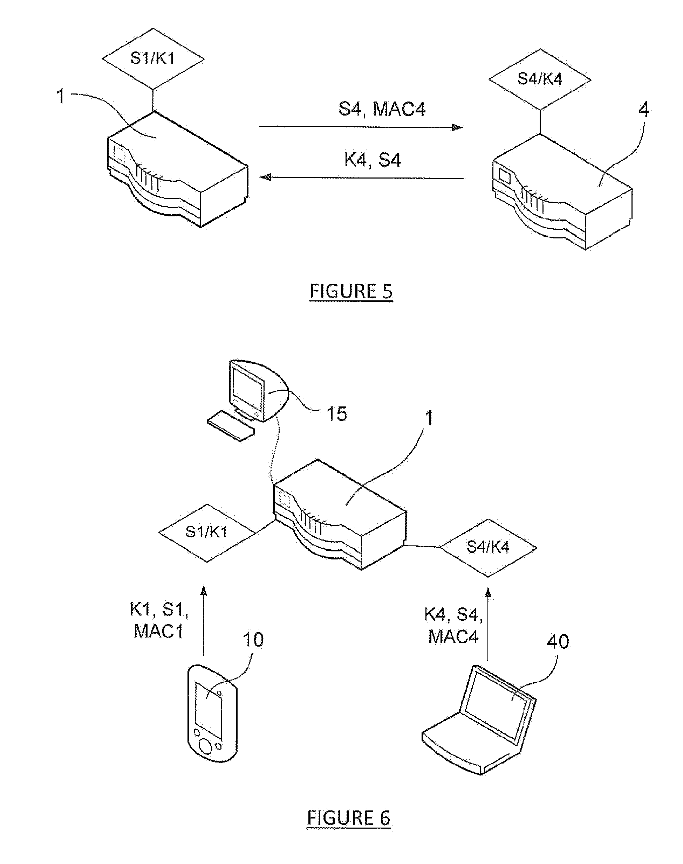

Dans l'affirmative, la passerelle partenaire, qui correspond à la passerelle visiteur 4, transmet, par requête sécurisée du type HTTPS, l' identifiant du réseau visiteur S4 avec la clé d'accès au réseau visiteur K4 (étape E4) comme représenté sur la figure 5. On privilégie une transmission sécurisée de l'identifiant S4 et de la clé d'accès K4 du réseau visiteur car ce sont des données sensibles.

Une fois en possession de l'identifiant S4 et de la clé d'accès K4 du réseau visiteur, la passerelle hôte 1 établit un accès virtuel au réseau hôte (étape E5), dit accès virtuel visiteur. A cet effet, son point d'accès 13 crée un identifiant de réseau virtuel (SSID) associé à une clé de réseau virtuel qui correspondent à l'identifiant du réseau visiteur S4 et à la clé d'accès K4 du réseau visiteur.

Selon l'exemple décrit, la création de l'accès virtuel visiteur se traduit par une configuration du point d'accès 13 en mode « multi-ssid» paramétré par le code de commande ci-dessus
Iwconfig athO essid « S4 »
lwpriv ath0 wpa 3
Wpa_passphrase ssid K4

Grâce à l'accès visiteur, la passerelle hôte 1 se fait passer virtuellement pour la passerelle visiteur 4 vis-à-vis du terminal visiteur 40. Autrement dit, le terminal visiteur 40 se connecte à la passerelle hôte 1 en transmettant le même identifiant S4 et la même clé d'accès K4 que s'il se connectait à la passerelle visiteur 4 (étape E5).

Par ailleurs, si l'hôte souhaite se connecter au réseau hôte avec son terminal hôte 10, comme représenté sur la figure 6, le terminal hôte in envoie une requête en connexion, « Probe Request », à la passerelle hôte 1, qui comprend l'identifiant du réseau hôte S1 et l'adresse physique unique MAC1 du terminal hôte 10.

Le module de coordination Il envoie une requête à la mémoire 12 afin de vérifier si ces paramètres d'identification sont connus (étape E1). Comme le terminal hôte 10 est déjà inscrit auprès de la passerelle hôte 1, la requête en connexion du terminal hôte 10 est acceptée (étape E2). Le terminal hôte 10 se connecte au réseau hôte via l'accès hôte de manière transparente.

Autrement dit, le point d'accès 13 de la passerelle hôte 1 est agencé pour établir simultanément, d'une part, un accès hôte au réseau hôte, paramétré par un identifiant du réseau hôte S1 et une clé d'accès du réseau hôte K1, afin que les terminaux hôtes 10 se connectent au réseau hôte 1 et, d'autre part, un accès visiteur au réseau hôte, paramétré par l'identifiant du réseau visiteur S4 et la clé d'accès du réseau visiteur K4, afin que les terminaux visiteurs 40 se connectent au réseau hôte 1.

L'identifiant du réseau visiteur 54 et à la clé d'accès K4 du réseau visiteur sont stockés de manière temporaire par la passerelle hôte 1 et sont effacés à la déconnexion du terminal visiteur 40 du réseau hôte. Ainsi, les données sensibles du réseau visiteur ne sont pas conservées par la passerelle hôte 1.

Par ailleurs, l'accès visiteur est également supprimé à la déconnexion du terminal visiteur 40 du réseau hôte. Autrement dit, le SSID supplémentaire est supprimé. Ainsi, si le terminal visiteur 40 souhaite se connecter de nouveau au réseau hôte, il est nécessaire de réitérer les étapes du procédé d'accès, ce qui garantit un haut degré de sécurité pour le visiteur comme pour l'hôte.

En référence à la figure 6, le visiteur accède au réseau hôte et peut ainsi échanger des données avec les autres équipements du réseau hôte comme par exemple un PDA 10 et un ordinateur 15.

Aucune nouvelle saisie de paramètres d'identification n'est nécessaire de la part du visiteur qui se connecte au réseau hôte de manière transparente. En effet, ses paramètres d'identification demeurent inchangés qu'il soit à son domicile ou chez un hôte.

Par ailleurs, l'accès du visiteur est sécurisé et pratique pour l'hôte. L'accès est sécurisé par le fait que l'hôte ne communique jamais les paramètres d'identification de son reseau au visiteur et par le fait qu'il choisit les partenaires auxquels il souhaite accorder un accès. L'accès est pratique du fait que l'hôte n'a pas à modifier ses paramètres d'identification à son réseau s'il ne souhaite plus autoriser l'accès au visiteur, une simple manipulation sur l'interface de sa passerelle hôte 1 permettant de résilier l'autorisation précédemment accordée.

L'invention a été ici décrite avec un unique visiteur mais il va de soi que plusieurs visiteurs peuvent se rendre de manière concomitante chez un hôte. A cet effet, autant d'accès virtuels que nécessaires sont créés par la passerelle hôte 1.

L'invention a été ici décrite avec un accès du type WIFI mais elle s'applique à toute connexion à un réseau nécessitant un accès sécurisé comme par exemple une connexion de type courant porteur de ligne connu sous l'abréviation CPL ou de type Bluetooth ®.

## Revendications

1. Procédé d'accès sécurisé d'au moins un terminal visiteur (40) à un réseau hôte via une passerelle hôte (1), le terminal visiteur (40) étant déjà paramètre pour accéder à un réseau visiteur via une passerelle visiteur (4) grâce à un identifiant du réseau visiteur (S4) et une clé d'accès au réseau visiteur (K4), procédé **caractérise par le fait qu'**il comprend les étapes suivantes mises en oeuvre par la passerelle hôte (1):
- réception de l'identifiant du réseau visiteur (S4) fourni par le terminal visiteur (40),
- transmission de l'identifiait du réseau visiteur (S4) à la passerelle visiteur (4).;
- réception de la clé d'accès au réseau visiteur (K4) transmise par la passerelle visiteur (4),
- création d'un accès visiteur au réseau hôte, l'accès visiteur étant paramètres par l'identifiant (S4) et la clé d'accès (K4) du réseau visiteur, avec transformation virtuelle de la passerelle hôte (1) en la passerelle visiteur (4) ; et
- réception de l'identifiant (S4) et de la clé d'accès (K4) du réseau visiteur pour accéder au réseau hôte via l'accès visiteur de la passerelle hôte (1), identifiant (S4) et la clé d'accès (K4) étant transmis par le terminal visiteur (40).

2. Procédé selon la revendication 1, la passerelle hôte (1) comprenant une mémoire (12) de stockage d'adresses de passerelles partenaires, comprenant au moins l'adresse de la passerelle visiteur (4), et un module de coordination (11) agencé pour consulter ladite mémoire (12), le procédé comprenant une étape de transmission, aux adresses des passerelles partenaires, de l'identifiant du réseau visiteur (S4) via le module de coordination (11).

3. Procédé selon l'une des revendications 1 et 2, comprenant une étape de transmission à la passerelle visiteur (4) de l'identifiant du réseau visiteur (S4) et d'un identifiant unique du terminal visiteur (MAC4).

4. Procédé selon l'une des revendications précédentes, dans lequel l'accès visiteur est supprime lorsque le terminal visiteur (40) n'accède plus au réseau hôte.

5. Procédé selon l'une des revendications précédentes, dans lequel les échanges entre la passerelle hôte (1) et la passerelle visiteur (4) sont réalisés via un protocole de communication sécurisé.

6. Procède selon l'une des revendications précédentes, dans lequel, la passerelle hôte (1) possède une adresse (ADR) de la passerelle visiteur (4) pour lui transmettre des données, l'adresse (ADR.) de la passerelle visiteur (4) étant obtenue par les étapes suivantes mises en oeuvre par la passerelle hôte (1) ,
- réception d'un identifiant unique (NUM) du visiteur, à la passerelle hôte (1) transmis par un terminal hôte;
- transmission de l'identifiant unique (NUM) du visiteur, à une base de données d'utilisateurs (7) comprenant au moins l'adresse (ADR) de la passerelle visiteur (4) associée à l'identifiant unique (NUM) du visiteur;
- réception de l'adresse (ADR) de la passerelle visiteur (4) transmise depuis la base de données d'utilisateurs (7) et
- stockage de l'adresse (ADR) de la passerelle visiteur (4).

7. Procédé selon l'une des revendications précédentes, comprenant en outre les étapes suivantes mises en oeuvre par la passerelle hôte (1):
- réception d'un identifiant unique (NUM) d'un utilisateur partenaire, transmis par un terminal hôte,
- transmission de l'identifiant unique (NUM) de l'utilisateur partenaire à une base de données d'utilisateurs (7) comprenant au moins l'adresse (ADR) des passerelles partenaires des utilisateurs associée à leur identifiant unique (NUM);
- réception de l'adresse (ADR) de la passerelle partenaire de l'utilisateur partenaire depuis la base de données d'utilisateurs (7) ; et
- stockage de l'adresse (ADR) de la passerelle partenaire.

8. Passerelle hôte pour la mise en oeuvre du procédé selon l'une des revendications 1 à 6 comprenant:
- un point d'accès (13) agencé pour recevoir un identifiant d'un réseau visiteur (S4) par un terminal visiteur (40) ,
- une mémoire (12) de stockage d'adresses de passerelles partenaires (2, 3, 4, 5) comprenant au moins une adresse (ADR4) d'une passerelle visiteur (4) d'un réseau visiteur, le terminal visiteur (40) étant déjà identifié auprès de ladite passerelle visiteur (4);
- un module de coordination (11) agencé pour transmettre l'identifiant du réseau visiteur (S4) à l'adresse de la passerelle visiteur (ADR4) et recevoir en retour, si l'identifiant du réseau visiteur (S4) transmis est connu de la passerelle visiteur (4), une clé d'accès (K4) du réseau visiteur ;
- le point d'accès (13) étant agencé pour établir d'une part, un accès hôte au réseau hôte paramétré par un identifiant (S1) et une clé d'accès (K1) au réseau hôte et, d'autre part, un accès visiteur au réseau hôte paramétré par l'identifiant (S4) et la clé d'accès du réseau visiteur (K4).

9. Passerelle selon la revendication précédente, dans laquelle le point d'accès (13) est agencé pour fonctionner selon un mode « multi-ssid » afin d'établir simultanément l'accès hôte et l'accès visiteur.

10. Programme d'ordinateur pour l'exécution du procédé selon la revendication 1.

11. Support d'enregistrement dans lequel est stocké le programme selon la revendication 10.
